Europäisches Patentamt

European Patent Office

Office européen des brevets

(11) Veröffentlichungsnummer: **0 188 287**
**A2**

(12) # EUROPÄISCHE PATENTANMELDUNG

(21) Anmeldenummer: 86100509.8

(22) Anmeldetag: 16.01.86

(51) Int. Cl.⁴: **B 60 L 5/34**
**B 60 L 5/36**

(30) Priorität: 16.01.85 BG 68406/85

(43) Veröffentlichungstag der Anmeldung:
23.07.86 Patentblatt 86/30

(84) Benannte Vertragsstaaten:
AT CH DE FR GB IT LI

(71) Anmelder: AVTOKOMBINAT
20, Boul. Hr. Botev
Plovdiv(BG)

(72) Erfinder: Gaydarov, Emanuil Stefanov
2, V. Levski Street
Plovdiv(BG)

(72) Erfinder: Russev, Koytcho Yankov
13, Rusha Street
Plovdiv(BG)

(72) Erfinder: Paltchin, Vassil Assenov
Komplex Trakia Block 10-2
Plovdiv(BG)

(72) Erfinder: Stoilov, Ivan Trifonov
14-A, Petiletka Street
Plovdiv(BG)

(74) Vertreter: Ebbinghaus, Dieter et al,
v. FÜNER, EBBINGHAUS, FINCK Patentanwälte
European Patent Attorneys Mariahilfplatz 2 & 3
D-8000 München 90(DE)

(54) Oberleitungs-Stromabnehmer für spurungebundene Fahrzeuge.

(57) Das erfindungsgemäße Oberleitungs-Stromabnehmersystem besteht aus einer Stange 1, die in ihrem unteren Teil beweglich am Oberleitungsbus und in ihrem oberen Teil an dem in Fahrtrichtung äußeren Ende eines Trägers 2 befestigt ist, auf dem Stromabnehmer-Gleitstücke 3 angeordnet sind. Die Stange 1 ist mit dem Träger 2 über einen Anpreßkörper 4 verbunden. Das äußere Stromabnehmer-Gleitstück 3 ist unbeweglich an dem Träger 2 montiert. Das innere Stromabnehmer-Gleitstück 3 ist längsbeweglich zum Träger 2 montiert. An jedem Gleitstück 3 ist mittels eines nach innen diagonalen Ablenkers 5 eine Stromleitbrücke 6 montiert. Der Anpreßkörper 4 ist an der Stange 1 parallel zum Speisenetz 7 befestigt. An ihm ist eine Pendeleinheit 8 mit einem Fixiermodul 9 montiert, der mit dem äußeren Ende des Trägers 2 verbunden ist. Im vorderen Teil einer jeden Stromleitbrücke 6 ist ein Verlängerungsmechanismus 10 montiert, dessen Steuereingang mit dem Ausgang eines Steuerblocks 11 verbunden ist, dessen erster Informationseingang über einen Richtungsgeber 12 an das Speisenetz 7 angeschlossen ist, während sein zweiter Informationseingang mit dem Ausgang eines Strahlensensors 13 verbunden ist, der frontal am Oberleitungsbus angeordnet ist. Unmittelbar neben dem Strahlensensor 13 ist eine Strahlenquelle 14 angeordnet.

./...

Fig.1

AVTOKOMBINAT                    EPAB-33504.6
                               16. Januar 1985


<u>Oberleitungs-Stromabnehmer für spurun-
gebundene Fahrzeuge</u>


Die Erfindung betrifft einen Oberleitungs-Stromabnehmer,
der im gleislosen Elektro-Stadtverkehr eingesetzt werden
kann.


Ein bekannter Oberleitungs-Stromabnehmer (SU-PS 543 533)
besteht aus äußeren und inneren oberen und seitlichen Strom-
abnehmer-Gleitstücken, die auf einem Isolationsträger angeordnet sind. Der Träger ist mit einer Stange verbunden,
die aus zwei mittels einer Feder untereinander verbundenen
Teilen besteht. Der obere Teil der Stange ist gelenkig mit
dem Kreuzstück des Trägers, der untere mit dem Fahrzeug
verbunden.


Ein Nachteil dieses bekannten Systems liegt in der Notwendigkeit des völligen Austausches des Kontaktnetzes, um ein
gegenseitiges Überholen zweier Oberleitungsbusse realisieren zu können. Außerdem ist der Einsatz des bekannten
Systems dadurch begrenzt, daß es bei der Fahrt nur ein Überholen der Oberleitungsbusse bei ein  und derselben Stromlinie in gleicher Richtung erlaubt.

Der Erfindung liegt die Aufgabe zugrunde, einen Oberleitungs-Stromabnehmer mit verbesserten Betriebseigenschaften zu entwickeln, der die Fahrt von Oberleitungsbussen über ein und dieselbe Stromleitung in beiden Richtungen erlaubt, d.h. ein Überholen oder Aneinandervorbeifahren bei einem Standard-Einwege-Speisenetz.

Diese Aufgabe wird erfindungsgemäß durch einen Oberleitungs-Stromabnehmer gelöst, mit einer Stange, die in ihrem unteren Teil beweglich am Oberleitungsbus befestigt ist und in ihrem oberen Teil am in Fahrtrichtung äußeren Ende eines Trägers, auf dem Stromabnehmer-Gleitstücke angeordnet sind. Die Stange ist mit dem Träger über einen Anpreßkörper verbunden. Das äußere Stromabnehmer-Gleitstück ist unbeweglich am Träger montiert. Das innere Stromabnehmer-Gleitstück ist längsbeweglich zum Träger montiert. An jedem Gleitstück ist mittels eines inneren diagonalen Lenkers eine Stromleitbrücke montiert. Der Anpreßkörper ist an der Stange parallel zur Speiseleitung befestigt. An ihm ist eine Pendeleinheit mit einem Fixiermodul montiert, der mit dem äußeren Ende des Trägers verbunden ist. Im vorderen Teil einer jeden Stromleitbrücke ist ein Verlängerungsmechanismus montiert, dessen Steuereingang mit dem Ausgang eines Steuerblocks verbunden ist, dessen erster Informationseingang über einen Richtungsgeber an das Speisenetz angeschlossen ist, während sein zweiter Informationseingang mit dem Ausgang eines Strahlensensors verbunden ist, der frontal am Oberleitungsbus angeordnet ist. Unmittelbar neben dem Strahlensensor ist eine Strahlenquelle angeordnet. Der Anpreßkörper besteht aus einem einseitig geschlossenen Gehäuse, welches mittels einer Achse und einer Torsions-Spiralfeder mit einem starr an der Stange befestigten abgeschrägten Zylinder mit Positionierstift verbunden ist. Mit der Stirnseite des einseitig geschlossenen Gehäuses ist die Pendeleinheit verbunden. Diese Pendeleinheit besteht aus einem Gehäuse mit profilierter Pufferkammer. An einer Achse ist eine freie Schwinge montiert, deren Führungen durch Löcher im Gehäuse in der profilierten Pufferkammer positioniert sind. Die freie Schwinge wird durch elastische Feststeller horizontal zum Gehäuse fixiert. Der Fixiermodul enthält einen oberen Deckel, der starr an dem Träger montiert ist, und eine drehbare obere Schale, die in eine untere Fixierschale eingefügt ist, welche starr mit der freien Schwinge der Pendeleinheit verbunden ist. Im oberen Deckel, in der drehbaren oberen Schale und in der unteren Fixierschale ist zentral eine Anpreßachse angeordnet. Radial sind in der Peripherie der oberen drehbaren Schale in zylindrischen Öffnungen Feder-Kugel-Feststeller angeordnet, die in Fixierkanälen der unteren Fixierschale gelagert sind. Jeder Verlängerungsmechanismus besteht aus einem Gehäuse, in dessen Frontseite eine Ausstoßeinrichtung eingebaut ist, die mit einem zentral angeordneten Verlängerungsglied verbunden ist, welches in seinem hinteren Teil mittels eines elastischen Rückstellers an der hinteren Wand des Gehäuses fixiert ist. Der elektrische Eingang der Ausstoßeinrichtung ist der Steuereingang des Verlängerungsmechanismus.

Jede der Stromleitbrücken besteht aus einem Scharnierbogen, an dessen mittlerem Glied ein innendiagonaler Lenker befestigt ist. An seinem vorderen Glied ist ein frei um seine senkrechte Achse drehbarer Führer montiert, in den der Verlängerungsmechanismus eingebaut ist. An seinem hinteren Führungsglied ist ein um seine senkrechte Achse frei drehbarer Führer montiert.

Ein Vorteil des erfindungsgemäßen Oberleitungs-Stromabnehmersystems liegt darin, daß es die Fahrt von Oberleitungsbussen an ein und derselben Stromleitung in beiden Richtungen ermöglicht, und zwar beim Überholen oder Begegnen bei Verwendung eines Standard-Einweg-Speisenetzes.

Die Erfindung wird anhand des in der Zeichnung gezeigten Ausführungsbeispiels näher erläutert. Es zeigen:

Fig. 1     eine Gesamtansicht eines erfindungsgemäßen Oberleitungsbus-Stromabnehmers,

Fig. 2     einen Schnitt durch den Anpreßkörper mit der Schaukeleinheit und dem Anpreßmodul,

Fig. 3     eine Gesamtansicht des Verlängerungsmechanismus,

Fig. 4     eine Gesamtansicht einer Stromleitbrücke mit eingezogenem Verlängerungsglied des Verlängerungsmechanismus - Position bei normaler Fahrt und Überholen,

Fig. 5     eine Gesamtansicht einer Stromleitbrücke mit vorwärts ausgezogenem Verlängerungsmechanismus - Position bei aneinander vorüberfahrenden Fahrzeugen,

Fig. 6     die Anordnung der Stromabnehmer von zwei Oberleitungsbussen beim Überholen,

Fig. 7 bis 13     den dynamischen Verlauf des Überholvorganges.

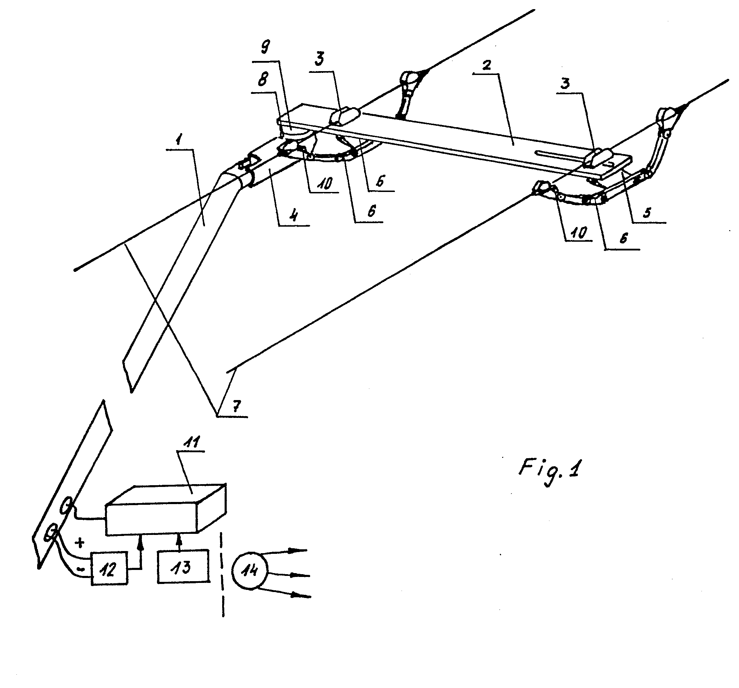

Der erfindungsgemäße Stromabnehmer nach Fig. 1 besteht aus einer Stange 1, deren unterer Teil beweglich am Oberleitungsbus und an deren oberem Ende das in Fahrtrichtung äußere Ende eines Trägers 2 befestigt ist, auf dem Stromabnehmer-Gleitstücke 3 angeordnet sind. Die Stange 1 ist mit dem Träger 2 über einen Anpreßkörper 4 verbunden. Das äußere Stromabnehmer-Gleitstück 3 ist unbeweglich am Träger 2 montiert. Das innere Stromabnehmer-Gleitstück 3 ist längs des Trägers 2 beweglich montiert. An jedes Stromabnehmer-Gleitstück 3 ist mittels eines nach innen diagonalen Lenkers 5 eine Stromleitbrücke 6 montiert. Der Anpreßkörper 4 ist an der Stange 1 parallel zum Fahrdraht 7 befestigt. An ihm ist eine Pendeleinheit 8 mit einem Fixiermodul 9 montiert, der mit dem äußeren Ende des Trägers 2 verbunden ist. Am vorderen Teil einer jeden Stromleitbrücke 6 ist ein Verlängerungsmechanismus 10 montiert, dessen Steuereingang mit dem Ausgang eines Steuerblocks 11 verbunden ist, dessen erster Informationseingang über einen Richtungsgeber 12 mit dem Speisenetz bzw. den Fahrdrähten 7 verbunden ist, während sein zweiter Informationseingang mit dem Ausgang eines Strahlensensors 13 verbunden ist, der frontal am Oberleitungsbus angeordnet ist. Unmittelbar neben dem Strahlensensor 13 ist eine Strahlenquelle 14 angeordnet.

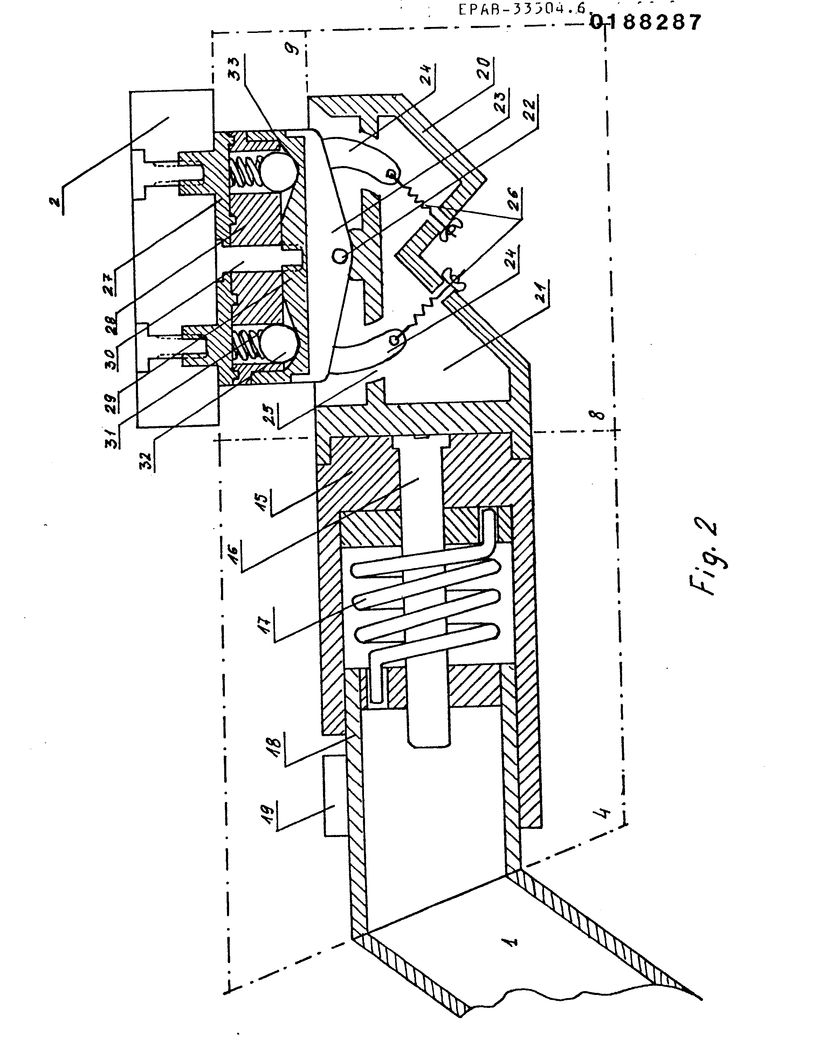

Der Anpreßkörper 4 (Fig. 2) besteht aus einem einseitig geschlossenen Gehäuse 15, welches mittels einer Achse 16 und einer Torsions-Spiralfeder 17 mit einem starr an der Stange 1 befestigten abgeschrägten Zylinder 18 mit einem Positionierstift 19 verbunden ist. Mit der Stirnseite des einseitig geschlossenen Gehäuses 15 ist die Pendeleinheit 8 verbunden.

Die Pendeleinheit 8 (Fig. 2) besteht aus einem Gehäuse 20 mit profilierter Pufferkammer 21. An einer Achse 22 ist eine freie Schwinge 23 montiert, deren Führungen 24 durch Löcher 25 im Gehäuse 20 in der Pufferkammer 21 positioniert sind. Die freie Schwinge 23 wird durch elastische Feststeller 26 horizontal zum Gehäuse 20 fixiert.

Der Fixiermodul 9 (Fig. 2) enthält einen oberen Deckel 27, der starr am Träger 2 montiert ist, und eine drehbare obere Schale 28, die in eine untere Fixierschale 29 eingefügt ist, welche starr mit der freien Schwinge 23 der Pendeleinheit 8 verbunden ist. Im oberen Deckel 27, in der drehbaren oberen Schale 28 und in der unteren Fixierschale 29 ist zentral eine Anpreßachse 30 angeordnet. Radial sind in der Peripherie der oberen drehbaren Schale 28 in zylindrischen Öffnungen 31 Feder-Kugel-Feststeller 32 angeordnet, die in Fixierkanälen 33 der unteren Fixierschale 29 gelagert sind.

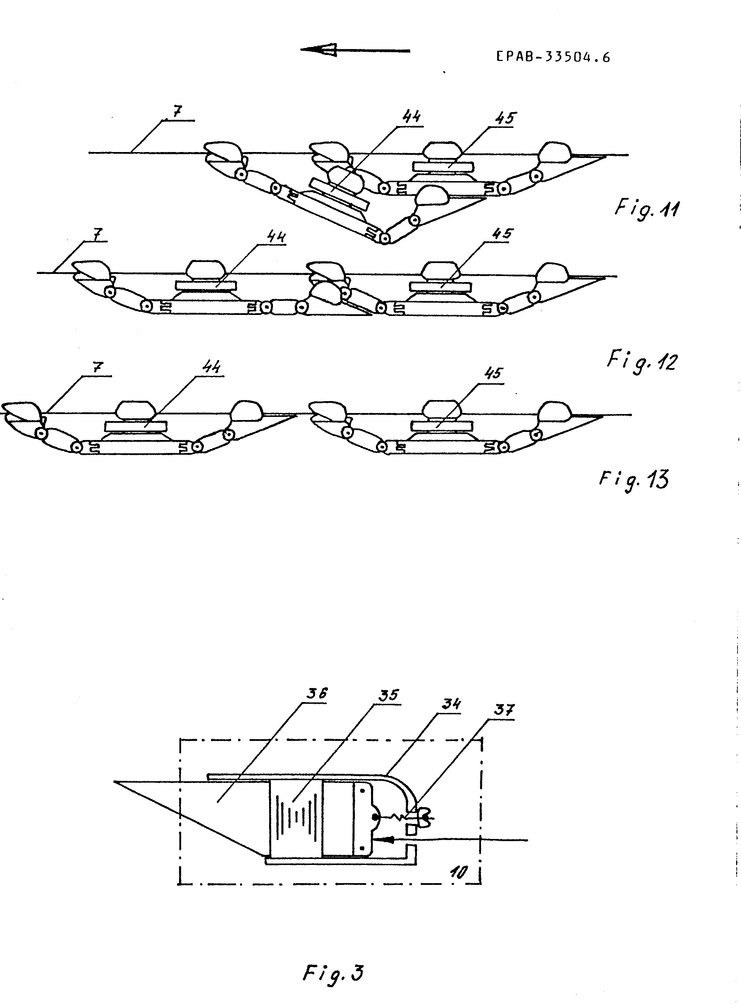

Jeder Verlängerungsmechanismus 10 (Fig. 3) besteht aus einem Gehäuse 34, in dessen Frontseite eine Ausstoßeinrichtung 35 eingebaut ist, die mit einem zentral angeordneten Verlängerungsglied 36 verbunden ist, welches in seinem hinteren Teil mittels eines elastischen Rückstellers 37 an der hinteren Wand des Gehäuses fixiert ist. Der elektrische Eingang der Ausstoßeinrichtung 35 ist der Steuereingang des Verlängerungsmechanismus.

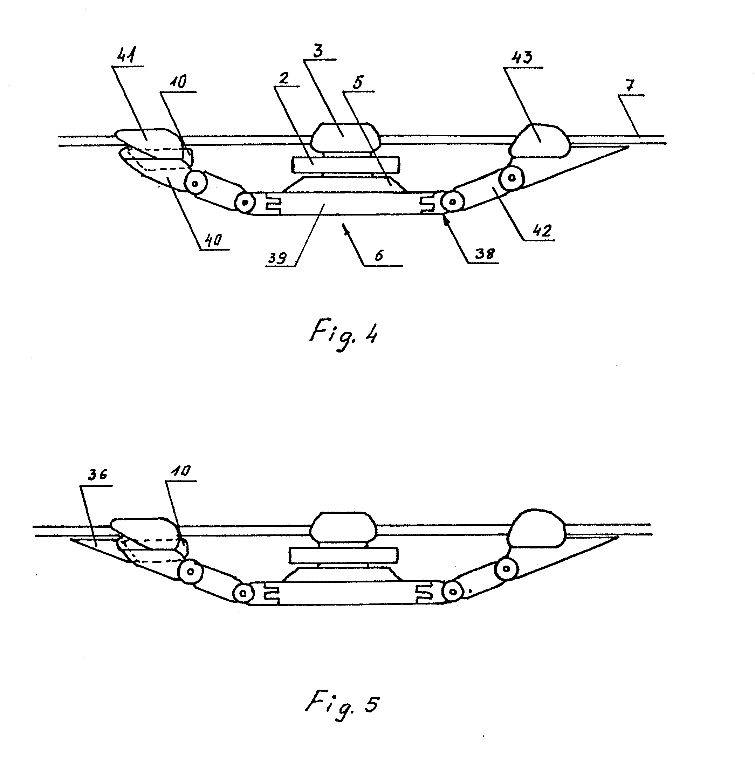

Jede der Stromleitbrücken 6 (Fig. 4, 5) besteht aus einem Scharnierbogen 38, an dessen mittlerem Glied 39 der nach innen diagonale Lenker 6 befestigt ist. An seinem vorderen Glied 40 ist ein frei um seine senkrechte Achse drehbarer Führer 41 montiert, in den der Verlängerungsmechanismus 10 eingebaut ist. An seinem hinteren Glied 42 ist ein um seine senkrechte Achse frei drehbarer Führer 43 montiert.

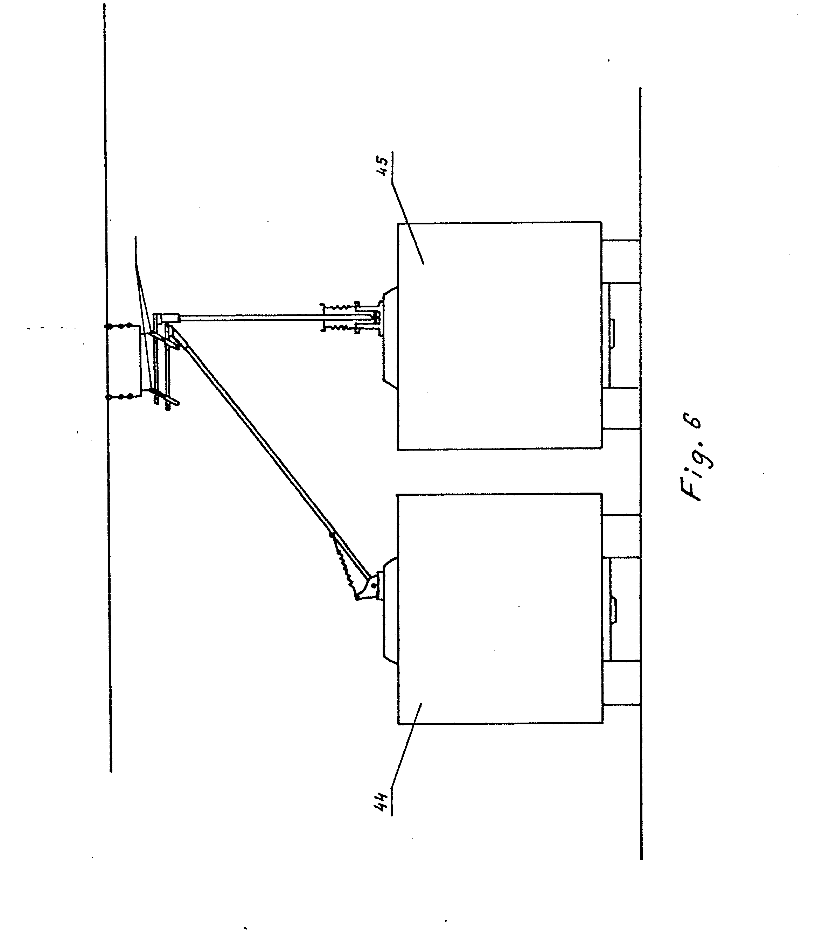

Im Moment des Überholens (Fig. 6) sind die Fahrdrähte 7, der überholende Oberleitungsbus 44 und der überholte Oberleitungsbus 45 folgenderweise angeordnet: Die Fahrdrähte 7 werden vom Stromabnehmer des überholten Oberleitungsbusses 45 und dessen Stromleitbrücken vom Stromabnehmer des überholenden Oberleitungsbusses 44 kontaktiert.

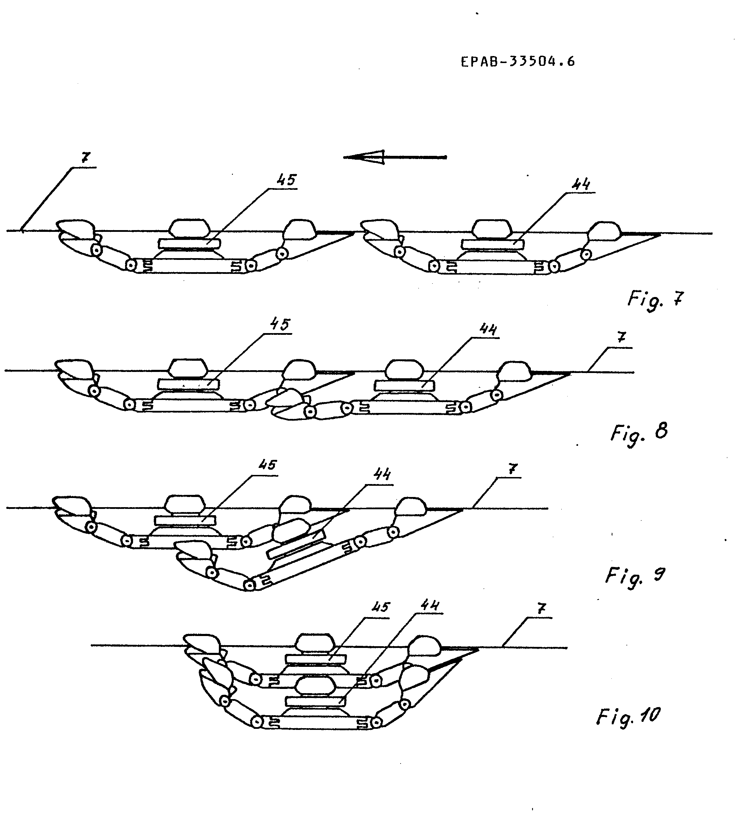

Die Wirkungsweise des erfindungsgemäßen Oberleitungsbus-Stromabnehmersystems ist wie folgt:
Wenn beim Überholvorgang zweier in gleicher Richtung fahrender Oberleitungsbusse (Fig. 6), die über die gleichen Fahrdrähte 7 gespeist werden, der überholende Oberleitungsbus 44 den zu überholenden Oberleitungsbus 45 erreicht (Fig. 7), gehen die Stromleitbrücken 6 des überholenden Oberleitungsbusses 44 von den Fahrdrähten 7 auf die Stromleitbrücken 6 (Fig. 8) des überholten Oberleitungsbusses 45 über. Dank der hinteren Glieder 42 (Fig. 4) setzen sie ihre Bewegung über die Stromleitbrücken 6 fort (Fig. 9, 10, 11) und gelangen dank der vorderen Glieder 40 erneut auf die Fahrdrähte 7 (Fig. 12, 13).

Da die Stromleitbrücken 6 in bezug auf die Stromabnehmer-Gleitstücke 3 senkrecht und seitlich versetzt sind, wird mittels der nach innen diagonalen Lenker 5 der Stromabnehmer des überholenden Oberleitungsbusses 44 nach unten und nach innen verlegt, wodurch ein Zusammenstoßen der Stangen 1 und der Stromabnehmer der beiden Oberleitungsbusse vermieden wird.

Der Anpreßkörper 4 gewährleistet ein gleiches Andrücken der Stromabnehmer-Gleitstücke 3 an die Fahrdrähte 7. Die Pendeleinheit 8 gewährleistet ein Schwenken des Trägers 2 um seine Längsachse, resp. der Stromabnehmer-Gleitstücke 3 und der Stromleitbrücken 6, was einen zügigen Übergang des einen Stromabnehmers unter dem anderen ermöglicht. Der Fixiermodul 9 gewährleistet das Drehen des Trägers 2 um die Anpreßachse 30, wodurch ungleiche periphere Geschwindigkeiten der Stromabnehmer-Gleitstücke 3 bei Fahrt in einer Kurve und bei Rückkehr des Trägers 2 in normaler Position bei Fahrt über gerade Wegabschnitte ausgeglichen werden.

Beim Aneinandervorbeifahren (Begegnen) zweier in entgegengesetzter Richtung an den gleichen Fahrdrähten fahrender Oberleitungsbusse ist die Situation wie folgt: Beim Annähern der Oberleitungsbusse beleuchten die Strahlungsquellen 14 eines jeden den Strahlensensor 13 des anderen Oberleitungsbusses und sie senden dann ein Signal zu dem Steuerblock 11.

Der Richtungsgeber 12 wird in jenem Oberleitungsbus angesprochen, in dem die Polarität des Speisennetzes bzw. der Fahrdrähte 7 mit der Polarität seiner Eingänge zusammenfällt. Er sendet ein Signal zu dem Steuerblock 11 dieses Oberleitungsbusses und dieser erzeugt nur dann ein Steuersignal, falls gleichzeitig der Strahlensensor und der Richtungsgeber angesprochen werden. Dann wird das Signal vom Ausgang des Steuerblocks 11 der Ausstoßeinrichtung 35 des Verlängerungsmechanismus 10 zugeführt. Diese verschiebt die Verlängerungsglieder 36 vorwärts und die vorderen Glieder der Stromleitbrücken 6 nur in dem einen Oberleitungsbus werden identisch zu den hinteren Gliedern. Dann gleitet der Stromabnehmer des anderen Oberleitungsbusses unbedingt unter ihm. Der Übergangsvorgang der beiden Stromabnehmer untereinander ist analog wie beim Überholen.

Im Moment des Vorbeifahrens werden, weil der Anpreßkörper 4 unter einem Winkel zur Stange 1 befestigt ist, die Stangen 1 seitlich verlegt, wodurch ein Zusammenstoß der Stromleitbrücken 6 und der Stangen 1 beider Oberleitungsbusse vermieden wird.

P a t e n t a n s p r ü c h e :

1. Oberleitungs-Stromabnehmer mit einer Stange (1), die in ihrem unteren Teil beweglich am Oberleitungsbus und in ihrem oberen Teil an einem isolierenden Träger (2) befestigt ist, auf dem Stromabnehmer-Gleitstücke(3) angeordnet sind, dadurch g e k e n n z e i c h n e t , daß die Stange (1) mit dem Träger (2) an dessen in Fahrtrichtung äußerem Ende über einen Anpreßkörper (4) verbunden ist, daß das äußere Gleitstück (3) unbeweglich an dem Träger (2) montiert ist, daß das innere Gleitstück (3) längsbeweglich zum Träger (2) montiert ist, daß an jedem Gleitstück (3) mittels eines entsprechenden nach innen diagonalen Ablenkers (5) eine Stromleitbrücke (6) montiert ist, daß der Anpreßkörper (4) an der Stange (1) parallel zu den Fahrdrähten (7) und an ihm eine Pendeleinheit (8) mit einem Fixiermodul (9) montiert ist, der mit dem äußeren Ende des Trägers (2) verbunden ist, und daß im vorderen Teil einer jeden Stromleitbrücke (6) ein Verlängerungsmechanismus (10) montiert ist, dessen Steuereingang mit dem Ausgang eines Steuerblocks (11) verbunden ist, dessen erster Informationseingang über einen Richtungsgeber (12) mit dem Speisenetz (7) und dessen zweiter Informationseingang mit dem Ausgang eines Strahlensensors (13) verbunden ist, der frontal am Oberleitungsbus angeordnet ist, wobei unmittelbar neben dem Strahlensensor (13) eine Strahlenquelle (14) angeordnet ist.

2. Stromabnehmer nach Anspruch 1, dadurch g e k e n n - z e i c h n e t , daß der Anpreßkörper (4) aus einem einseitig geschlossenen Gehäuse (15) besteht, welches mittels einer Achse (16) und einer Torsions-Spiralfeder (17) mit einem starr an der Stange (1) befestigten abgeschrägten Zylinder (18) mit Positionierstift
(19) verbunden ist, und daß mit der Stirnseite des einseitig geschlossenen Gehäuses (15) die Pendeleinheit
(8) verbunden ist.

3. Stromabnehmer nach Anspruch 1, dadurch  g e k e n n -
z e i c h n e t   , daß die Pendeleinheit (8) aus einem
Gehäuse (20) mit profilierter Pufferkammer (21) besteht,
wobei an einer Achse (22) eine freie Schwinge (23) montiert ist, dessen Führungen (24) durch Löcher (25) im
Gehäuse (20) in der Pufferkammer (21) positioniert sind,
und daß die freie Schwinge (23) durch elastische Feststeller (26) horizontal zum Gehäuse (20) fixiert wird.

4. Stromabnehmer nach Anspruch 1, dadurch  g e k e n n -
z e i c h n e t   , daß der Fixiermodul (9) einen oberen starr am Träger (2) montierten Deckel (27) und eine
drehbare obere Schale (28) enthält, die in eine untere
Fixierschale (29) eingefügt ist, welche starr mit der
freien Schwinge (23) der Pendeleinheit (8) verbunden
ist, daß im oberen Deckel (27), in der drehbaren oberen Schale (28) und in der unteren Fixierschale (29)
zentral eine Anpreßachse (30) angeordnet ist, und daß
radial in der Peripherie der oberen drehbaren Schale
(28) in zylindrischen Öffnungen (31) Feder-Kugel-Feststeller (32) angeordnet sind, die in Fixierkanälen (33)
der unteren Fixierschale (29) gelagert sind.

5. Stromabnehmer nach Anspruch 1, dadurch  g e k e n n -
z e i c h n e t    , daß jeder Verlängerungsmechanismus
(10) aus einem Gehäuse (34) besteht, in dessen Frontseite eine Ausstoßeinrichtung (35) eingebaut ist, die mit einem zentral angeordneten Verlängerungsglied (36) verbunden ist, welches in seinem hinteren Teil mittels eines elastischen Rückstellers (37) an der hinteren Wand des Gehäuses (34) fixiert ist, wobei der elektrische Eingang der Ausstoßeinrichtung (35) der Steuereingang des Verlängerungsmechanismus (10) ist.

6. Stromabnehmer nach Anspruch 1, dadurch g e k e n n - z e i c h n e t , daß jede der Stromleitbrücken (6) aus einem Scharnierbogen (38) besteht, an dessen mittlerem Glied (39) ein innen diagonaler Lenker (6) und an dessen vorderem Glied (40) ein frei um seine senkrechte Achse drehbarer Führer (41) montiert ist, in den der Verlängerungsmechanismus (10) eingebaut ist, und daß an seinem hinteren Glied (42) ein um seine Achse frei drehbarer Führer (43) montiert ist.

Fig. 1

*Fig. 2*

EPAB-33504.6

Fig. 11

Fig. 12

Fig. 13

Fig. 3

EPAB-33504.6  **0188287**

Fig. 4

Fig. 5

0188287

EPAB-33504.6

Fig. 6

EPAB-33504.6

45

44

7

Fig. 7

45

44

7

Fig. 8

45

44

7

Fig. 9

45

44

7

Fig. 10